**Europäisches Patentamt**

**European Patent Office**

**Office européen des brevets**

(19)

(11) Veröffentlichungsnummer: **0 007 431**
**B1**

(12) # EUROPÄISCHE PATENTSCHRIFT

(45) Veröffentlichungstag der Patentschrift:
16.09.81

(51) Int. Cl.³: **F 16 S 3/00**, E 06 B 3/20

(21) Anmeldenummer: **79102001.9**

(22) Anmeldetag: **18.06.79**

(54) **Bauprofilleiste, insbesondere Profilleiste für die Herstellung von Fensterrahmen und Verfahren zur Herstellung dieser Leiste.**

(30) Priorität: **24.06.78 DE 2827851**

(43) Veröffentlichungstag der Anmeldung:
**06.02.80 Patentblatt 80/3**

(45) Bekanntmachung des Hinweises auf die Patenterteilung:
**16.09.81 Patentblatt 81/37**

(84) Benannte Vertragsstaaten:
**BE DE LU NL SE**

(56) Entgegenhaltungen:
1. CH-A-411 301
2. DE-A-2 407 113
3. DE-C-1 086 032
4. DE-U-1 994 127
5. FR-A-1 602 375

(73) Patentinhaber: **Schock & Co. GmbH, Gmünder Strasse 65, D-7060 Schorndorf (DE)**

(72) Erfinder: **Schock, Karl, Aichenbachstrasse 136, D-7060 Schorndorf (DE)**
Erfinder: **Frank, Lothar, Schneeberg 51, D-7067 Plüderhausen (DE)**

(74) Vertreter: **Haecker, Walter et al, Patentanwaltskanzlei W. Höger W. Stellrecht, D. Griessbach W. Haecker Uhlandstrasse 14c, D-7000 Stuttgart-1 (DE)**

Bauprofilleiste, insbesondere Profilleiste für die Herstellung von Fensterrahmen und Verfahren zur Herstellung dieser Leiste

Die Erfindung betrifft ganz allgemein Profilleisten zur Verwendung auf dem Bausektor, z.B. für die Herstellung von Balkongeländern, jedoch handelt es sich insbesondere um Profilleisten für die Herstellung von Fensterrahmen; es soll sich um solche Leisten handeln, die ein Hohlprofil aus einem thermoplastischen Kunststoff und eine Hohlräume enthaltende Füllung mit einer Kunststoffmatrix aufweisen.

Es sind zahlreiche Profilleisten für die Herstellung von Fensterrahmen bekannt, die einen Mantel aus einem extrudierten Kunststoffhohlprofil und einen Kern aus Naturholz, Pressspan, Metall oder Kunststoff-Hartschaum besitzen. Sie erfüllen jedoch alle nicht die an ein Kunststoffenster zu stellenden Forderungen, da sie entweder nicht die notwendige Festigkeit aufweisen oder ein zu hohes Wärmeleitvermögen besitzen oder Verrottungs- bzw. Korrosionsgefahr besteht; auch ergeben sich bei vielen bekannten derartigen Profilleisten Abdichtungsprobleme an den Ecken eines aus solchen Leisten hergestellten Rahmens, weil entweder überhaupt kein Verbund zwischen dem den äusseren Mantel bildenden Kunststoffhohlprofil und dem Leistenkern besteht oder dieser Verbund unter der Einwirkung von Temperaturschwankungen und/oder mechanischen Beanspruchungen nicht dauerhaft genug ist, so dass Wasser von den Stossstellen an den Ecken eines Rahmens in die Fugen zwischen äusserem Kunststoffhohlprofil und Profilkern gelangen oder sich dort Kondenswasser bilden kann.

So weist beispw. eine bekannte Profilleiste für die Herstellung von Fensterrahmen (FR-A 1,279,732) ein äusseres, im Extrusionsverfahren hergestelltes Hohlprofil aus PVC und eine Füllung auf, deren Matrix aus einem Giessharz, insbesondere Epoxy-Harz, besteht, in das Polystyrol-Schaumpartikel eingelagert sind. Es zeigt sich aber, dass eine solche Profilleiste nicht die in der Praxis erforderliche Biegefestigkeit und Dimensionsbeständigkeit bei Temperaturschwankungen aufweist und dass auch die Haftung des Epoxyharzes an dem äusseren PVC-Hohlprofil nicht befriedigt. Zur Erhöhung der Biegesteifigkeit enthält die Füllung einer Ausführungsform dieser bekannten Profilleiste Armierungsstangen, deren Einsatz jedoch eine kontinuierliche Fertigung unmöglich macht.

Bei einer anderen bekannten Profilleiste für die Herstellung von Fensterrahmen (DE-C 1,086,032) ist gleichfalls ein äusseres Kunststoffhohlprofil mit einer Füllung aus Steinholz oder Phenolharzmasse vorgesehen, wobei über das Material für das äussere Hohlprofil nichts ausgesagt wird. Geht man einmal davon aus, dass ein gängiger thermoplastischer Kunststoff wie PVC verwendet wird, so mangelt es dieser bekannten Profilleiste schon an dem notwendigen festen und dauerhaften Verbund zwischen äusserem Hohlprofil und der Füllung.

Es ist des weiteren ein einstückiger Fenster- oder Türrahmen bekanntgeworden (DE-C 1,161,005), welcher einen äusseren Mantel aus glasfaserverstärktem Giessharz und einen Kern aus Schaumkunststoff besitzt, dessen Mantel in der üblichen Weise in einer Form im Handauflegeverfahren erzeugt wird. Ganz abgesehen davon, dass diese Art der Herstellung äusserst zeitraubend und deshalb kostspielig ist, scheidet dieser Stand der Technik in der Praxis schon deshalb aus, weil für jede Rahmengrösse eine gesonderte Form benötigt wird. Würde man aber den Rahmenschenkelaufbau auf eine kontinuierlich hergestellte Profilleiste übertragen, so müsste man entweder einen verhältnismässig dicken Mantel aus glasfaserverstärktem Kunststoff verwenden, was wegen der notwendigen Witterungsbeständigkeit der für den Mantel zu verwendenden Kunststoffe teuer wäre, oder müsste man auf die notwendige Festigkeit der Leiste verzichten.

Der Erfinder hat sich deshalb die Aufgabe gestellt, eine insbesondere für die Herstellung von Fensterrahmen geeignete Bauprofilleiste zu schaffen, die sich billig und in einem kontinuierlichen Verfahren herstellen lässt sowie die an eine solche Profilleiste zu stellenden Forderungen hinsichtlich ihrer Dimensionsbeständigkeit, Wärmedämmungseigenschaften und dergleichen erfüllt. Ausgehend von einer Bauprofilleiste mit einem Hohlprofil aus einem plastischen Kunststoff, insbesondere PVC, und einer Hohlräume enthaltenden Füllung mit einer Kunststoffmatrix lässt sich diese Aufgabe erfindungsgemäss dadurch lösen, dass die Füllung eine Matrix aus Methylmetracrylat mit hohlen Silikatkügelchen als Füller aufweist. Die hohlen jedoch geschlossenen Glaskügelchen tragen zu einer hohen Festigkeit bei und vermindern ausserordentlich stark das Schrumpfen des Kunststoffs der Füllung, so dass sich schon aus diesem Grund ein besonders guter Verbund zwischen Füllung und äusserem Hohlprofil ergibt. Derartige Glaskügelchen stellen auch einen besonders billigen Füller dar, da sie z.B. aus den Abgasen von kohlebeheizten Kraftwerken abgesondert werden. Die Füllung der erfindungsgemässen Profilleiste weist ein relativ hohes Gewicht auf, was sich günstig auf die Schalldämmungseigenschaften auswirkt, während die hohlen Silikatkügelchen die Wärmedämmung erheblich erhöhen. Das in das extrudierte PVC-Hohlprofil gegebene Methylmetacrylat hat deshalb eine besonders gute Haftung an dem PVC-Mantel, weil es gegenüber Polyvinylchlorid aggressiv ist und so zu einer Vernetzung zwischen der Matrix der Füllung und dem PVC-Mantel führt. Diese gute Verbindung zwischen Füllung und Mantel hat auch zur Folge, dass bei der Herstellung eines Rahmens aus der erfindungsgemässen Profilleiste an den Ecken kein besonderer Aufwand bei der Kantenabdichtung erforderlich ist. Wegen der hohen Festigkeit der erfindungsgemässen Füllung kann die Wandstärke des äusseren Hohlprofils besonders klein gemacht werden und sie beträgt bei einer bevorzugten Ausführungsform nur noch zirka 1 mm, was deshalb besonders vorteilhaft ist, weil der Preis für einen hinsichtlich Witterungsbeständigkeit und dergl. guten Mantelwerkstoff um zirka 100% höher ist als der Preis für ein geeignetes Füllungsmaterial. Der duroplastische Kern (bestehend aus Polymethylmetacrylat und den Silikatkügelchen) führt dazu, dass auch bei verhältnismässig hohen Aussentemperaturen keinerlei Wärmeverformungen auftreten, und da eine erfindungsgemässe Profilleiste einen Temperaturausdehnungskoeffizienten besitzt, der nur etwa 1/10 desjenigen eines üblichen PVC-Hohlprofils beträgt, ist es nicht notwendig, bauseits eine elastische Fuge vorzusehen, wie dies bei den heutigen PVC-Fensterrahmen der Fall ist. Auch kann der erfindungsgemässe Leistenkern weder quellen noch verrotten oder korrodieren.

Werden aus der erfindungsgemässen Profilleiste gebildete Rahmenschenkel an den Rahmenecken miteinander verbunden, so zeigt sich ein weiterer wesentlicher Vorteil der erfindungsgemässen Profilleiste: Durch die hohe Festigkeit der Füllung halten Schrauben in dieser Füllung besonders fest (die Ausreissfestigkeit von Schrauben ist ungefähr dreimal so gross wie bei Fichtenholz!), so dass die Rahmenschenkel an den Rahmenecken weder miteinander verschweisst noch miteinander verklebt werden müssen, da eine einfache Verbindung mittels Schrauben ausreicht. Die Verarbeitung der erfindungsgemässen Profilleiste ist also besonders einfach, so dass die Verarbeitung nicht in Spezialbetrieben erfolgen muss.

Zwar ist die Verwendung von Silikat-Mikrohohlkugeln als Füller schon bekannt, jedoch auf völlig anderen Gebieten, so z.B. als Füller für eine Kunststoff-Tischtennisplatte (DE-A 24 07 113), welche einen PVC-Mantel mit einem Schaumkunststoffkern aufweist, in den die Mikrohohlkugeln als Füller eingebettet sind.

Um die Biegefestigkeit der erfindungsgemässen Profilleiste noch weiter zu erhöhen, sind bei einer bevorzugten Ausführungsform in die Füllung in Leistenlängsrichtung verlaufende Fäden, insbesondere Glasfäden, eingebettet. Vorzugsweise werden Glasrovings eingesetzt. Besonders gute Ergebnisse lassen sich erzielen, wenn diese Fäden unter einer Längszugspannung stehen. Auch hier macht sich die Verwendung von Methylmetacrylat als Kunststoffmatrix für die Füllung besonders vorteilhaft bemerkbar, weil die Glasfäden von diesem Kunststoff besonders gut benetzt werden, so dass sich ein hervorragender Verbund zwischen Glasfäden und dem Polymethylmetacrylat ergibt.

Die erfindungsgemässen Profilleisten lassen sich verhältnismässig einfach kontinuierlich herstellen, indem ein Hohlprofil aus einem thermoplastischen Kunststoff, insbesondere PVC, extrudiert und in dieses Methylmetacrylat hineingepresst wird. Dadurch, dass die Füllung dem Hohlprofil unter Druck zugeführt wird, erübrigt sich eine aufwendige Vakuumkalibrierung des Hohlprofils. Presst man das Methylmetacrylat in das noch heisse Hohlprofil, so kann das Methylmetacrylat kalt zugeführt werden, da es an der heissen Wand des Hohlprofils zu polymerisieren beginnt. Ein erster Vorteil ist dabei darin zu sehen, dass das kalte Methylmetacrylat das Hohlprofil kühlt, ausserdem härtet die Füllung zunächst an der Innenseite des Hohlprofils aus, so dass die Wand der Profilleiste auch bei geringsten Wandstärken des Hohlprofils besonders glatt wird. Obwohl Methylmetacrylat gegenüber PVC aggressiv ist, löst es PVC dennoch nicht auf, so dass die Erfindung die Verwendung eines äusserst dünnen Profilmantels erlaubt.

Die gewünschte Längszugspannung der die Biegesteifigkeit erhöhenden Fäden wird am einfachsten dadurch erzielt, dass die Fäden beim Extrudieren eingelegt und dabei abgebremst werden – die einigermassen ausgehärtete Profilleiste wird ja aus der Extrusions- und Kalibriervorrichtung abgezogen.

Weitere Merkmale, Einzelheiten und Vorteile der Erfindung ergeben sich aus der nachfolgenden Beschreibung und der beigefügten zeichnerischen Darstellung einer bevorzugten Ausführungsform der erfindungsgemässen Bauprofilleiste und des Verahrens zu ihrer Herstellung; es zeigen:

Fig. 1 einen Schnitt durch die für die Herstellung eines Fensterrahmens geeignete Profilleiste;

Fig. 1a den Ausschnitt A aus Figur 1 in grösserem Masstab als in Figur 1, und

Fig. 2 eine schematische Darstellung einer Anlage zur Durchführung des erfindungsgemässen Verfahrens.

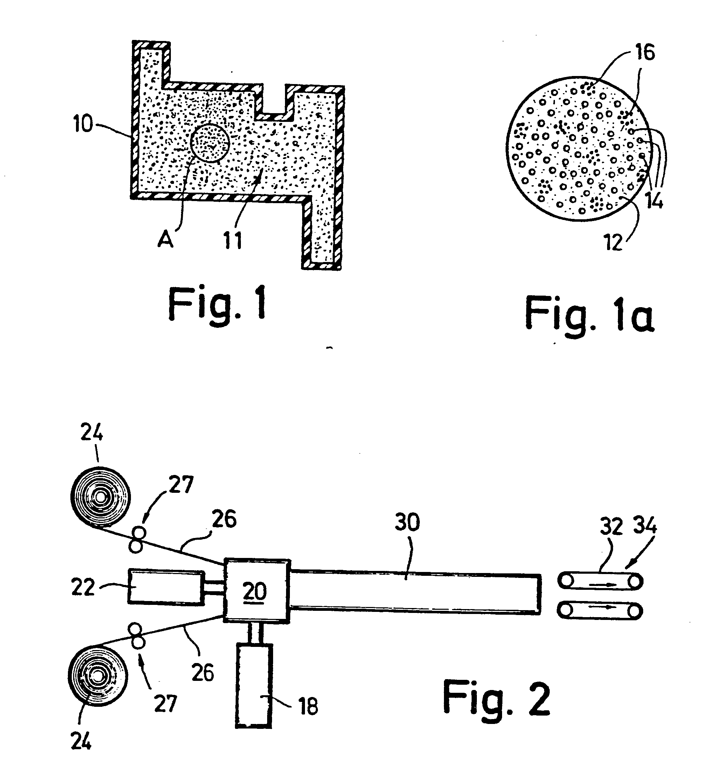

Die Figur 1 zeigt einen als Hohlprofil ausgebildeten Kunststoffmantel 10 aus PVC mit einer Füllung 11 aus Polymethylmetacrylat, Mikroglaskügelchen und in Leistenlängsrichtung verlaufenden, vorgespannten Glasrovings. In Fig. 1a ist die Kunststoffmatrix aus Polymethylmetacrylat mit 12 bezeichnet worden, während die Mikroglaskügelchen bei 14 zu sehen sind und die Glasrovings mit 16 bezeichnet wurden.

Die Figur 2 zeigt schematisch in der Draufsicht eine Anlage zur Herstellung der in Fig. 1 dargestellten Profilleiste; diese Anlage besitzt einen ersten Extruder 18 zum Extrudieren schmelzflüssigen PVCs, welches in einem Extrusionswerkzeug 20 zu dem den Kunststoffmantel 10 bildenden Hohlprofil geformt wird. In dieses presst ein Extruder 22 kaltes Methylmetacrylat, in das Mikroglaskugeln eingemischt sind, und gleichzeitig werden von Spulen 24 Glasrovings 26 abgezogen und mit Hilfe des Extrusionswerkzeugs 20 in die Füllung der Profilleiste eingelegt; Extrusionswerkzeuge, mit denen ein äusserer Kunststoffmantel geformt, in diesen kontinuierliche Verstärkungen eingelegt werden können und der vom Mantel gebildete Hohlraum mit einer Füllung versehen werden kann, sind bekannt, so dass sie hier nicht näher geschildet zu werden brauchen.

In einer Kalibrierbüchse 30 wird unter gleichzeitigem Aushärten des äusseren Hohlprofils und der Füllung die Profilleiste kalibriert, so dass sie mit Hilfe von angetriebenen Bändern oder Raupen 32 einer als Ganzes mit 34 bezeichneten Abzugsvorrichtung abgezogen werden kann. Diese Abzugsvorrichtung bringt zusammen mit an den Glasrovings 26 angreifenden Bremsen 27 die Längszugspannung auf die Glasrovings auf.

**Patentansprüche:**

1. Bauprofilleiste, insbesondere Profilleiste für die Herstellung von Fensterrahmen, mit einem Hohlprofil aus einem thermoplastischen Kunststoff, insbesondere PVC, und einer Hohlräume enthaltenden Füllung (11) mit einer Kunststoffmatrix, dadurch gekennzeichnet, dass die Füllung (11) eine Matrix aus Methylmetacrylat (12) mit hohlen Silikatkügelchen (14) als Füller aufweist.

2. Profilleiste nach Anspruch 1, dadurch gekennzeichnet, dass in die Füllung (11) in Leistenlängsrichtung verlaufende Fäden (16), insbesondere Glasfäden, eingebettet sind.

3. Profilleiste nach Anspruch 2, dadurch gekennzeichnet, dass die Fäden Glasrovings (16) sind.

4. Profilleiste nach Anspruch 2 oder 3, dadurch gekennzeichnet, dass die Fäden (16) unter einer Längszugspannung stehen.

5. Verfahren zur Herstellung einer Leiste nach einem oder mehreren der vorstehenden Ansprüche, dadurch gekennzeichnet, dass ein Hohlprofil extrudiert und in dieses Methylmetacrylat hineingepresst wird.

6. Verfahen nach Anspruch 5, dadurch gekennzeichnet, dass das Methylmetacrylat in das noch heisse Hohlprofil eingepresst wird.

7. Verfahren nach Anspruch 6, dadurch gekennzeichnet, dass das Methylmetacrylat in zumindest nahezu kaltem Zustand in das noch heisse Hohlprofil eingebracht wird.

8. Verfahren nach einem oder mehreren der Ansprüche 5–7, dadurch gekennzeichnet, dass die Fäden beim Extrudieren eingelegt und dabei abgebremst werden, um eine Längszugspannung aufzubringen.

**Claims**

1) Sectional construction strip, more particularly a sectional strip for the production of window frames, with a tubular section of a thermoplastics material, more particularly PVC, and a fill (11) which contains cavities and has a plastics matrix, characterized in that the fill (11) comprises a matrix of methylmethacrylate (12) with small hollow silicate spheres (14) as filler.

2) Sectional strip according to Claim 1, characterized in that filaments (16), more particularly glass filaments, extending along the longitudinal orientation of the strips, are embedded in the fill (11).

3) Sectional strip according to Claim 2, characterized in that the filaments are glass rovings (16).

4) Sectional strip according to Claim 2 or 3, characterized in that the filaments (16) are subjected to longitudinal tensile stress.

5) Method of producing a strip according to any or several of the preceding Claims, characterized by the extrusion of a tubular section into which methylmetacrylate is pressed.

6) Method according to Claim 5, characterized in that the methylmethacrylate is pressed into the tubular section while the latter is still hot.

7) Method according to Claim 6, characterized in that the methylmetacrylate is introduced in an at least nearly cold state into the tubular section which is still hot.

8) Method according to any or several of the Claims 5–7, characterized in that the filaments are inserted in the course of extrusion and are restrained to apply longitudinal tensile stress.

**Revendications**

1. Profilé, en particulier profilé pour la fabrication de châssis de fenêtre, comprenant un profilé creux à base d'une substance synthétique thermoplastique, en particulier de PCV, et un remplissage (11) contenant des cavités et présentant un noyau de substance synthétique, caractérisé en ce que le remplissage (11) présente un noyau à base de méthacrylate de méthyle (12) avec des petites billes creuses de silicate (14) à titre de charge.

2. Prifilé suivant la revendication 1, caractérisé en ce que des fils (16), en particulier des fils de verre, disposés dans le sens longitudinal du profilé, sont noyés dans le remplissage (11).

3. Profilé suivant la revendication 2, caractérisé en ce que les fils sont des stratifils de verre (16).

4. Profilé suivant l'une ou l'autre des revendications 2 et 3, caractérisé en ce que les fils (16) sont soumis à un effort de traction longitudinal.

5. Procédé de préparation d'un profilé suivant une ou plusieurs des revendications précédentes, caractérisé en ce qu'on extrude un profilé creux et en ce qu'on injecte dans ce dernier du méthacrylate de méthyle.

6. Procédé suivant la revendication 5, caractérisé en ce que le méthacrylate de méthyle est injecté dans le profilé creux encore chaud.

7. Procédé suivant la revendication 6, caractérisé en ce que le méthacrylate de méthyle est introduit à l'état au moins à peu près froid dans le profilé creux encore chaud.

8. Procédé suivant une ou plusieurs des revendications 5 à 7, caractérisé en ce que les fils sont introduits au cours de l'extrusion et sont alors freinés pour appliquer un effort de traction longitudinal.

Fig. 1

Fig. 1a

Fig. 2